# EUROPÄISCHE PATENTANMELDUNG

(11) **EP 3 702 114 A1**
(43) Veröffentlichungstag der Anmeldung: **02.09.2020**
(21) Anmeldenummer: 20158289.7
(22) Anmeldetag: 19.02.2020
(51) Int. Cl.: B25J 17/02, B25J 9/16

(54) **KONTAKTFLANSCHSYSTEM UND VERFAHREN ZUM BEARBEITEN EINER WERKSTÜCKOBERFLÄCHE**

(30) Priorität: 27.02.2019 DE 102019105022
(71) Anmelder: Seconsys GmbH, 08141 Reinsdorf (DE)
(72) Erfinder: Dietel, Robert, 08294 Lößnitz (DE)
(74) Vertreter: Steiniger, Carmen

(57) **Zusammenfassung**

Die vorliegende Erfindung beinhaltet ein Kontaktflanschsystem mit wenigstens einem Kontaktflansch mit einer Roboterschnittstelle und dazu gegenüber vorgesehenen und relativ dazu bewegbaren Werkzeughalterung, einem zwischen der Roboterschnittstelle und der Werkzeughalterung vorgesehenen Pneumatikzylinder und einer dazu parallelen Linearführung, und einer Neigungs- und/oder Beschleunigungsmesseinrichtung zur Erfassung einer Neigung des Kontaktflansches. Erfindungsgemäß ist zwischen der Linearführung und der Werkzeughalterung und/oder der Roboterschnittstelle keine mechanische Federeinrichtung vorgesehen, und der Kontaktflansch weist zwei im Inneren des wenigstens einen Pneumatikzylinders durch einen bewegbaren Zylinderkolben getrennte Zylinderkammern mit separaten Druckluftzuführungen, wobei in jeder der Druckluftzuführungen jeweils ein Druckregelventil vorgesehen ist, und eine mit der Neigungs- und/oder Beschleunigungsmesseinrichtung und den Druckregelventilen gekoppelte Datenverarbeitungs- und Steuereinrichtung auf, welche eine Prozesswertschnittstelle wenigstens für eine Vorgabe oder Eingabe einer Werkzeugmasse aufweist. Die Erfindung beinhaltet ferner ein Werkstückbearbeitungsverfahren mit einem solchen Kontaktflanschsystem.

## Beschreibung

Die vorliegende Erfindung betrifft ein Kontaktflanschsystem mit wenigstens einem Kontaktflansch mit einer Roboterschnittstelle und einer gegenüber der Roboterschnittstelle vorgesehenen und relativ zu dieser bewegbaren Werkzeughalterung, wenigstens einem zwischen der Roboterschnittstelle und der Werkzeughalterung vorgesehenen Pneumatikzylinder zur Positionierung der Werkzeughalterung relativ zu der Roboterschnittstelle und einer parallel zu dem wenigstens einen Pneumatikzylinder vorgesehenen Linearführung, und wenigstens einer Neigungs- und/oder Beschleunigungsmesseinrichtung zur Erfassung einer Neigung und/oder Neigungsänderung des Kontaktflansches. Die Erfindung betrifft ferner ein Verfahren zum Bearbeiten einer Oberfläche eines Werkstückes mit einem an einer Werkzeughalterung eines Kontaktflansches eines Kontaktflanschsystems gehaltenen Werkzeug, wobei der Kontaktflansch mit einem Roboter bewegt wird, mit dem der Kontaktflansch an einer der Werkzeughalterung gegenüber vorgesehenen Roboterschnittstelle verbunden ist, und die Werkzeughalterung relativ zu der Roboterschnittstelle mit wenigstens einem Pneumatikzylinder bewegt wird, wobei die Bewegung des wenigstens einen Pneumatikzylinders durch eine parallel zu dem wenigstens einen Pneumatikzylinder vorgesehene Linearführung linear geführt wird, und eine Neigung und/oder Neigungsänderung des Kontaktflansches erfasst wird.

In der Druckschrift DE 30 03 990 A1 ist eine lösbare Haltevorrichtung, wie eine Überlastsicherungsvorrichtung, zwischen einem Haltearm und einem Träger des Handhabungsgerätes beschrieben. Die Haltevorrichtung weist eine Magnetanordnung auf, durch die erreicht wird, dass bei einer Belastung oberhalb eines Schwellenwertes und bei einem bestimmten Maß einer Relativbewegung zwischen dem Haltearm und dem Träger die Haltekraft völlig aufgehoben wird.

In der Druckschrift DD 250 493 A1 wird eine Sicherheitsvorrichtung für Arbeitsautomaten vorgeschlagen, durch die bei einer Kollision der Antrieb des Arbeitsautomaten abgeschaltet und gleichzeitig die Kraftwirkung auf das Werkzeug unterbrochen wird. Die Sicherheitsvorrichtung weist ein Gehäuse auf, welches mit einem festen und einem frei beweglichen Flansch ein mit der Druckluftversorgung verbundenes Druckvolumen einschließt, wobei zwischen den beiden Flanschen eine Radialrichtung vorgesehen ist. Bei einer Kollision wird die Radialdirchtung abgehobem, woraufhin der daraus resultierende Druckabfall im Druckvolumen einen Abschaltmechanismus auslöst.

Die Druckschrift US 4,714,865 A offenbart eine Überlastschutzvorrichtung zwischen einem Roboterarm und einem Werkzeug. Die Überlastschutzvorrichtung weist einen Zylinder und einen darin linear beweglichen Kolben auf. An der Innenwand des Zylinders sind Hall-Effekt-Sensoren und auf der Mantelfläche des Kolbens zugehörige Magnete vorgesehen. Tritt eine Überlast am Roboterarm oder dem Werkzeug auf, bewegen sich die Magnete relativ zu den Sensoren, wodurch ein Druckverlustsignal generiert wird, woraufhin der Roboter und die Druckversorgung abgeschaltet werden.

Die Druckschrift DE 86 32 874 U1 beinhaltet eine Sicherheitskupplung für einen Roboter. Die Kupplung dient einem Überlastungsschutz gegen Druckkräfte und Kippmomente. An ihr kann ein Werkzeug wie beispielsweise ein Greifer befestigt werden. Sie weist einen topfartigen Zylinder auf, in dem ein scheibenförmiger Kolben geführt ist, der durch Druckfedern gegen einen umlaufenden Wulst des Zylinders gedrückt wird. Mit Hilfe eines eingebauten Näherungsschalters kann der Robotersteuerung eine Überschreitung eines eingestellten Kippwinkels angezeigt werden.

In der Druckschrift DE 10 2010 003 697 B4 wird eine sich zwischen einem Industrieroboter und einem Schleif- oder Greifwerkzeug angeordnete Handhabungsvorrichtung vorgeschlagen, die zur Feinsteuerung oder zur präzisen Regelung der Bewegung des Werkzeugs relativ zu einem zu bearbeitenden Werkstück sowie zur Regelung der vom Werkzeug auf das Werkstück ausgeübten Kraft verwendet wird. Zur Kraftregelung ist es notwendig, eine Messgröße für die Kontaktkraft beispielsweise mittels einer Kraftmessdose oder über den Motorstrom der Schleifmaschine zu ermitteln. Eine Kontaktkraftregelung ist erst möglich, nachdem das Werkzeug die Oberfläche kontaktiert hat. Die Handhabungsvorrichtung besitzt eine Roboterschnittstelle und eine Werkzeughalterung, zwischen welchen ein Linearaktor in Form eines pneumatischen Balgzylinders und eine dazu parallele Linearführungseinrichtung angeordnet sind. Durch eine an der Linearführungseinrichtung vorgesehene Feder wird eine Rückstellkraft für den Linearaktor zur Verfügung gestellt. Der tatsächliche Druck im Linearaktor wird mit einem Druckmesser gemessen. Ferner ist ein Wegsensor vorgesehen, welcher die aktuelle Auslenkung des Linearaktors und damit die Relativposition der Werkzeughalterung zur Roboterschnittstelle liefert. Um die Kraft, die auf die Werkstückoberfläche wirkt, zu ermitteln, muss zusätzlich das Gewicht des Werkzeugs und dessen räumliche Lage relativ zur Werkstückoberfläche bekannt sein.

Aus der Druckschrift DE 10 2013 106 819 B4 ist ein Verfahren zum robotergestützten Stapeln von Gegenständen bekannt. Hierbei kommt ein Manipulator mit einem Roboterarm zum Einsatz, an dessen eine Ende ein Aktor befestigt ist, der ein Werkzeug mit dem Roboterarm verbindet. Mit Hilfe des Aktors ist die vertikale Position des Werkzeugs relativ zu dem Roboterarm einstellbar. Der Aktor ist vorzugsweise ein Balgzylinder oder Luftmuskel, der gegen ein Federelement, das eine Rückstellkraft bewirkt, arbeitet. Er kann jedoch auch einen doppelt wirkenden Pneumatikzylinder aufweisen, wobei keine Feder zum Ausüben einer Rückstellkraft nötig ist. In dieser Druckschrift wird darauf verwiesen, dass ein solcher Aktor nur eine sehr geringe Haftreibung aufweisen darf und eine exakte Kraftregelung benötigt wird, um ein möglichst sanftes Ablegen des zu stapelnden Gegenstandes ermöglichen. Zu Beginn eines Stapelvorgangs befindet sich der Aktor in seiner Endposition mit maximaler Auslenkung, wobei der Aktor mit einer einstellbaren Minimalkraft gegen einen Anschlag drückt. Die Gewichtskraft des Gegenstandes muss vom Aktor fast vollständig kompensiert werden.

In der Druckschrift EP 2 686 142 B1 ist ein Kontaktflansch der oben angegebenen Gattung beschrieben. Der gattungsgemäße Kontaktflansch weist auf einer Seite eine Roboterschnittstelle und auf der gegenüber liegenden Seite eine Werkzeughalterung auf. Zwischen der Roboterschnittstelle und der Werkzeugaufnahme sind ein Linearaktor in Form eines Pneumatikzylinders oder eines Luftmuskels und parallel zu dem Linearaktor eine Führungseinrichtung vorgesehen. In der mit der Roboterschnittstelle verbundenen Führungseinrichtung ist eine Innenbohrung mit einem Kugelumlauflager vorgesehen, in welche eine unter Spannung einer mechanischen Feder stehende, mit der Werkzeughalterung verbundene Welle ragt. Durch die mechanische Feder soll die Gewichtskraft eines Werkzeugs kompensiert werden.

Parallel zu dem Linearaktor und der Führungseinrichtung ist ein Wegsensor vorgesehen, mit dem eine Relativposition zwischen der Roboterschnittstelle und der Werkzeughalterung bestimmt wird. Der beschriebene Kontaktflansch weist ferner einen Drucksensor zur Bestimmung des Ist-Drucks im Linearaktor auf. Durch den Wegsensor und den Drucksensor kann die vom Linearaktor bereitgestellte Aktorkraft bestimmt werden. Ferner ist eine Steuereinrichtung zur Regelung der Kontaktkraft des Kontaktflansches vorgesehen.

Solange dieser bekannte Kontaktflansch keinen Kontakt zu einer Oberfläche eines Werkstücks besitzt, drückt dessen Werkzeughalterung mit einer einstellbaren Minimalkraft gegen einen Anschlag. Diese Minimalkraft drückt also auch schon zu Beginn eines Prozesses gegen das Werkstück. Kommt es zu einem Medienausfall und/oder -verlust, ist zu befürchten, dass der Kontaktflansch mit seiner gesamten Gewichtskraft auf das Werkstück einwirkt, wobei beispielsweise Benutzer des Kontaktflansches verletzt werden können.

Bei dem bekannten Kontaktflansch besteht ferner das Problem, dass seine Kontaktkraft zum Werkstück aufgrund der Federkennlinie der mechanischen Feder in dessen Führungseinrichtung neigungs- und wegabhängig ist. Wird der bekannte Kontaktflansch beispielsweise in eine horizontale Lage gebracht, kommt es aufgrund der Trägheit des Systems zu Unstetigkeiten, da systembedingt eine Umschaltung von Druck- und Zugstufe erfolgt. Entsprechend ist eine Bearbeitung insbesondere von diffizilen Werkstücken mit diesem Kontaktflansch problematisch.

Aus der Druckschrift US 5,448,146 A ist ein pneumatisch betriebener Kontaktflansch bekannt, mit dem unabhängig von der Werkzeugausrichtung eine konstante Kraftwirkung auf eine Werkstückoberfläche ausgeübt werden soll. Hierzu sind bei dem bekannten Kontaktflansch zwischen einer mit einem Roboterarm gekoppelten Endeffektor-Grundplatte und einem Werkzeugschlitten ein Pneumatikzylinder mit einer Kolbenstange, ein mit dem Pneumatikzylinder gekoppelter Kraftsensor und parallel zu dem Pneumatikzylinder ein als eine Linearführung wirkender Schieber vorgesehen. An dem Schieber sind ein Potentiometer, ein Neigungssensor und ein Beschleunigungssensor vorgesehen. Die durch einen Kolben der Kolbenstange getrennten Kammern im Inneren des Pneumatikzylinders werden mittels über einen Prozessor gesteuerter Ventile mit Druckluft versorgt. Der Prozessor erhält hierfür über Datenleitungen Messwerte des Kraftsensors, des Potentiometers, des Neigungssensors und des Beschleunigungssensors.

Problematisch bei diesem Kontaktflansch ist, dass der verwendete Kraftsensor bei schnellen Kraftänderungen zum Schwingen neigt, was zur Folge hat, dass auch die Kontaktkraft dieses Kontaktflansches instabil sein kann. Dies macht sich insbesondere bei unterschiedlich schweren, am Kontaktflansch angebrachten Werkzeugen bemerkbar.

Auch bei diesem Kontaktflansch sind keine Vorkehrungen für den Fall eines Medienausfalls und/oder -verlusts getroffen.

Es ist daher die Aufgabe der vorliegenden Erfindung, ein sicheres und homogen arbeitendes Kontaktflanschsystem und ein Verfahren zum sicheren und homogenen Bearbeiten einer Oberfläche eines Werkstückes mit einem an einer Werkzeughalterung eines Kontaktflansches eines Kontaktflanschsystems gehaltenen Werkzeug zur Verfügung zu stellen.

Diese Aufgabe wird zum einen durch ein Kontaktflanschsystem mit einem Kontaktflansch mit einer Roboterschnittstelle und einer gegenüber der Roboterschnittstelle vorgesehenen und relativ zu dieser bewegbaren Werkzeughalterung, wenigstens einem zwischen der Roboterschnittstelle und der Werkzeughalterung vorgesehenen Pneumatikzylinder zur Positionierung der Werkzeughalterung relativ zu der Roboterschnittstelle, einer parallel zu dem wenigstens einen Pneumatikzylinder vorgesehenen Linearführung und wenigstens einer Neigungs- und/oder Beschleunigungsmesseinrichtung zur Erfassung einer Neigung und/oder Neigungsänderung der Werkzeughalterung relativ zu der Roboterschnittstelle gelöst, bei dem zwischen der Linearführung und der Werkzeughalterung und/oder der Roboterschnittstelle keine mechanische Federeinrichtung vorgesehen ist, und der Kontaktflansch zwei im Inneren des wenigstens einen Pneumatikzylinders durch einen bewegbaren Zylinderkolben getrennte Zylinderkammern mit separaten Druckluftzuführungen, wobei in jeder der Druckluftzuführungen jeweils ein Druckregelventil vorgesehen ist, und eine mit der Neigungs- und/oder Beschleunigungsmesseinrichtung und den Druckregelventilen gekoppelte Datenverarbeitungs- und Steuereinrichtung aufweist, welche wenigstens eine Prozesswertschnittstelle wenigstens für eine Vorgabe und/oder Eingabe einer Werkzeugmasse aufweist, wobei die Druckregelventile derart durch die Datenverarbeitungs- und Steuereinrichtung geregelt werden, dass von dem Kontaktflansch eine konstante Kontaktkraft auf das Werkstück bei gleichzeitiger Kompensation einer lageabhängigen Gewichtskraft des Werkzeuges ausgeübt wird.

Das erfindungsgemäße Kontaktflanschsystem ist ein sensitives Kontakttoolsystem. Es eignet sich schon bei kleinsten Anpresskräften unterhalb von 5 N und ist auch für hohe Anpresskräfte, von beispielsweise 100 N oder mehr, bestens geeignet.

Das erfindungsgemäße Kontaktflanschsystem weist zwei mechanische Schnittstellen auf. Die erste dieser Schnittstellen ist die Roboterschnittstelle, die die Montage wenigstens des Kontaktflansches an einen Manipulator, wie beispielsweise einen Industrieroboter, ermöglicht. Die zweite dieser Schnittstellen ist die Werkzeughalterung, die ein Anbringen verschiedener Werkzeuge, wie beispielsweise eines Schleifwerkzeuges oder eines Polierwerkzeuges, an den Kontaktflansch ermöglicht. Mit dem jeweiligen Werkzeug erfolgt die Bearbeitung eines Werkstückes. Vorzugsweise sind sowohl die Roboterschnittstelle als auch die Werkzeughalterung als Schnellwechselsysteme ausgebildet.

Die Datenverarbeitungs- und Steuereinrichtung weist vorzugsweise eine programmierbare Steuerung zur Berechnung von Stellgrößen für die Regelung der Druckregelventile und die Ansteuerung des wenigstens einen Pneumatikzylinders auf. Darüber hinaus weist die Datenverarbeitungs- und Steuereinrichtung wenigstens eine Schnittstelle zu wenigstens einem Neigungs- oder Beschleunigungssensor des Kontaktflanschsystems und gegebenenfalls zu weiteren Sensoren, wie einer gegebenenfalls vorgesehenen Weg- und/oder Positionsmesseinrichtung, und/oder zu wenigstens einer übergeordneten Anlage auf.

Die Datenverarbeitungs- und Steuereinrichtung kann im Einzelbetrieb oder auch im Verbundbetrieb arbeiten. Im Einzelbetrieb weist die Datenverarbeitungs- und Steuereinrichtung beispielsweise als Prozesswertschnittstelle ein Eingabemodul auf, in das wenigstens die jeweilige Werkzeugmasse manuell beispielsweise über eine Tastatur oder ein Touch-Panel eingegeben wird. Arbeitet die Datenverarbeitungs- und Steuereinrichtung im Verbundbetrieb, erhält sie wenigstens die Daten zu der jeweiligen Werkzeugmasse über eine Datenschnittstelle als Prozesswertschnittstelle von einer übergeordneten Anlage. Die ein- oder vorgegebene Werkzeugmasse wird von der Datenverarbeitungs- und Steuereinrichtung gemeinsam mit von der Datenverarbeitungs- und Steuereinrichtung empfangenen Sensordaten, wie der Neigung oder Neigungsänderung des Kontaktflansches rechentechnisch zur Kompensation der resultierenden Gewichtskraft bei der Regelung der Druckregelventile verarbeitet.

Vorzugsweise wird der Datenverarbeitungs- und Steuereinrichtung zusätzlich eine Prozesskraft und/oder eine Rampenzeit zum Aufbau oder zur Änderung einer Prozesskraft vorgegeben.

Entsprechend ist es mit dem erfindungsgemäßen Kontaktflanschsystem problemlos möglich, rasche Bewegungsänderungen des Kontaktflansches von einer Horizontalen in eine Vertikale und umgekehrt zu vollführen, ohne dass sich die Kontaktkraft des Kontaktflansches auf das Werkstück spürbar ändert.

Über die Prozesswertschnittstelle können noch andere Prozesswerte, wie eine auf das Werkstück wirkende Prozesskraft und/oder ein zumindest teilweiser Prozesskraftverlauf eingegeben oder eingestellt werden. Der Prozesskraftverlauf kann beispielsweise einen in Form einer Rampe gestalteten Prozesskraftaufbauabschnitt aufweisen. Der Prozesskraftaufbauabschnitt beinhaltet die Zeit bis zum vollständigen Anliegen der Prozesskraft nach einer Kontakterkennung am Werkstück.

Das erfindungsgemäße Kontaktflanschsystem kann ein oder mehrere Pneumatikzylinder als Stellelement(e) aufweisen. Mit Hilfe des oder der Pneumatikzylinder(s) wird die Prozesskraft, also die Kraft, mit welcher der Kontaktflansch auf ein Werkstück einwirkt, erzeugt.

In den beiden Zylinderkammern des jeweiligen Pneumatikzylinders kann durch die Druckregelventile separat ein jeweils in der jeweiligen Zylinderkammer herrschender Prozessdruck eingestellt werden. Dadurch kann die Werkzeughalterung vor Beginn eines Bearbeitungsvorganges in einer schwebenden Position, also nicht an einem Anschlag, gehalten werden. Das Werkzeug kommt erst nach Beginn des Bearbeitungsvorganges in Kontakt mit dem Werkstück. Bei dem Bearbeitungsvorgang wird bei dem erfindungsgemäßen Kontaktflanschsystem die Gewichtskraft des Werkzeugs kompensiert.

Kommen mehrere Pneumatikzylinder zum Einsatz, sind die Druckregelventile der jeweiligen Pneumatikzylinder vorzugsweise parallel geschaltet.

Die Neigungs- und/oder Beschleunigungsmesseinrichtung dient einer indirekten Berechnung der Lage des Kontaktflansches im Raum bei Verwendung an einem mehrachsigen Manipulator.

Bei dem erfindungsgemäßen Kontaktflanschsystem wird keine pneumatische oder mechanische Feder zur Kompensation der Gewichtskraft des Werkzeugs, wie beispielsweise in der Druckschrift EP 2 686 142 B1, eingesetzt. Der Vorteil hierbei ist, dass bei der vorliegenden Erfindung bei einer Wegänderung, also einer Abstandsänderung zwischen der Werkzeughalterung und der Roboterschnittstelle, keine Anpassung der Prozesskraft aufgrund einer Federkennlinie notwendig ist. Somit entfällt bei dem erfindungsgemäßen Kontaktflanschsystem auch eine spezielle Anpassung oder Kalibrierung mechanischer Bauteile der Linearführung, was bei deren Austausch oder Reparatur Zeit und Kosten spart.

Entsprechend ermöglicht das erfindungsgemäße Kontaktflanschsystem bei unterschiedlich schweren Werkzeugen und unterschiedlichen Werkzeugneigungen die Bereitstellung einer konstanten Prozess- und damit Kontaktkraft des Kontaktflansches auf das Werkstück. Dies ermöglicht eine Bearbeitung von diffizilen Werkstückkonturen mittels Handlings-Systemen oder Industrierobotern. Die Bahnkurve eines an die Roboterschnittstelle angeschlossenen Roboters kann einfach gehalten werden, da der Höhenausgleich zum Werkstück bei konstanter Kontaktkraft durch das Kontaktflanschsystem erfolgt.

Die parallel zu dem wenigstens einen Pneumatikzylinder vorgesehene Linearführung ist mechanisch robust und reibungsarm ausgebildet. Die Linearführung sperrt alle Bewegungsfreiheitsgrade außer dem der Bewegung des wenigstens einen Pneumatikzylinders.

In bevorzugten Ausbildungen des erfindungsgemäßen Kontaktflanschsystems weist dieses ferner wenigstens eine Weg- und/oder Positionsmesseinrichtung zur Erfassung eines Abstandes und/oder einer Abstandsänderung zwischen der Werkzeughalterung und der Roboterschnittstelle auf und die Datenverarbeitungs- und Steuereinrichtung ist mit der wenigstens einen Weg- und/oder Positionsmesseinrichtung gekoppelt.

Die Weg- und/oder Positionsmesseinrichtung dient zur Erkennung der Lage des Kontaktflansches in Richtung der Prozesskraft und in deren Gegenrichtung.

Die Ermittlung des Abstandes oder der Abstandsänderung zwischen der Werkzeughalterung und der Roboterschnittstelle ist dann sinnvoll, wenn sich der Zylinderkolben des wenigstens einen Pneumatikzylinders zu Beginn eines Bearbeitungsprozesses in einer schwebenden Position befindet und aus dieser heraus die Regelung der Druckregelventile erfolgt. Dann sind bei dem erfindungsgemäßen Kontaktflanschsystem keine Minimalkraft und auch kein Anschlag erforderlich. Stattdessen kann der Kontaktflansch aus der schwebenden Position heraus aus- und eingefahren werden.

Über die Prozesswertschnittstelle kann beispielsweise auch eingegeben werden, ob sich der Kontaktflansch in einer schwebenden Position befinden soll und/oder in welcher schwebenden Position sich der Kontaktflansch gegenüber einem Werkstück befinden soll. Damit ist es möglich, eine Höhe eines Werkstückes auszugleichen. Die schwebende Position hat den Vorteil, dass der Kontaktflansch sich bei Prozessbeginn nicht an einem Anschlag befindet, sondern kraftlos auf das Werkstück aus der schwebenden Position aufsetzen kann und danach bei Werkstückkontakterkennung ein Kraftaufbau beginnt.

Das erfindungsgemäße Kontaktflanschsystem ist auch ohne Verwendung eines Kraftsensors in der Lage, eine aktuelle Prozesskraft aus den mechanischen Gegebenheiten, wie der ein- oder vorgegebenen Werkzeugmasse, und der Neigungs- und/oder Beschleunigungsmesseinrichtung und gegebenenfalls der Weg- und/oder Positionsmesseinrichtung an die Datenverarbeitungs- und Steuereinrichtung übermittelten Daten berechneten Lage des Kontaktflansches im Raum, ständig zu berechnen und Sollwerte der Prozesskraft zu korrigieren.

In einer bevorzugten Ausführungsform des erfindungsgemäßen Kontaktflanschsystems ist an der Linearführung und/oder an dem wenigstens einen Pneumatikzylinder wenigstens eine mit der Datenverarbeitungs- und Steuereinrichtung gekoppelte Linearführungsbewegungsstoppereinrichtung vorgesehen.

Beispielsweise kann die Linearführungsbewegungsstoppereinrichtung wenigstens eine an der Linearführung vorgesehene Zahnstange und wenigstens ein mit der Datenverarbeitungs- und Steuereinrichtung gekoppeltes, in die wenigstens eine Zahnstange eingreifendes Zahnrad aufweisen. Die Zahnstange bildet mit dem Zahnrad ein Getriebe, das bei einem Medienausfall und/oder -verlust eine Haltebremse für das Werkzeug bildet und dieses in einer aktuellen Position festhält.

In anderen Ausführungsformen der vorliegenden Erfindung kann die Linearführungsbewegungsstoppereinrichtung auch mittels Ventilen realisiert werden.

Werden zur Ausbildung der Linearführungsbewegungsstoppereinrichtung Ventile eingesetzt, können diese auch entfernt von der Linearführung und/oder dem Pneumatikzylinder vorgesehen werden. Dann ist es sinnvoll, diese Ventile zu umhausen, um sie vor Verschmutzung zu schützen.

Vorzugsweise sind in den Druckluftzuführungen monostabile Sperrventile vorgesehen. Solche Sperrventile werden mit einem Erregerstrom versorgt. Sobald diese Sperrventile nicht mehr mit Strom versorgt werden, schließen sie. So kann bei einem Medienausfall und/oder -verlust die in den Zylinderkammern vorhandene Druckluft nicht entweichen und das Werkzeug wird in seiner aktuellen Position gehalten.

Ein Druckluftausfall kann beispielsweise einfach dadurch detektiert werden, dass in wenigstens einer die Druckluftzuführungen mit Druckluft versorgenden Druckluftversorgungsleitung wenigstens ein mit der Datenverarbeitungs- und Steuereinrichtung gekoppelter Drucksensor vorgesehen ist.

Obwohl das erfindungsgemäße Kontaktflanschsystem grundsätzlich auch ohne Kraftsensor arbeitet, kann es in verschiedenen Ausführungsformen des erfindungsgemäßen Kontaktflanschsystems trotzdem von Vorteil sein, wenn in oder an der Werkzeughalterung wenigstens ein Kraftsensor vorgesehen ist. So kann ein solcher Kraftsensor beispielsweise als Kalibriermittel zur Reibungskompensation eingesetzt werden. So kann beispielsweise eine bestimmte Kraft vorgegeben werden. Wird dann mit dem Kraftsensor eine andere als die vorgegebene Kraft gemessen, können beispielsweise durch Reibung verursachte Verschleißerscheinungen in dem Kontaktflanschsystem vorliegen. Wird dies festgestellt, ist eine Selbstkalibrierung oder eine Reparatur möglich.

In vorteilhaften Ausbildungen des erfindungsgemäßen Kontaktflanschsystems weist die Weg- und/oder Positionsmesseinrichtung wenigstens einen magnetischen Positionssensor und wenigstens einen Magnet auf. Durch die Weg- und/oder Positionsmesseinrichtung wird beispielsweise eine aktuelle Schwebeposition des Zylinderkolbens des wenigstens einen Pneumatikzylinders erfasst, und ausgehend von dieser Schwebeposition erfolgt die weitere Regelung der Druckregelventile zur weiteren Positionsveränderung des Zylinderkolbens.

In günstigen Ausgestaltungen der vorliegenden Erfindung ist zwischen dem Kontaktflansch und der Datenverarbeitungs- und Steuereinrichtung ein Adapter vorgesehen. Dies hat den Vorteil, dass bei einem neuen Prozess nur das Bearbeitungstool, aber nicht die Steuerung ausgetauscht werden muss.

In einer vorteilhaften Ausbildung des erfindungsgemäßen Kontaktflanschsystems ist/sind die Datenverarbeitungs- und Steuereinrichtung und/oder die Weg- und/oder Positionsmesseinrichtung mit einer mehrere Lichtemitterdioden aufweisenden Momentanpositionsanzeigeeinheit gekoppelt.

Die Aufgabe wird ferner durch ein Verfahren zum Bearbeiten einer Oberfläche eines Werkstückes mit einem an einer Werkzeughalterung eines Kontaktflansches eines Kontaktflanschsystems gehaltenen Werkzeug, wobei der Kontaktflansch mit einem Roboter bewegt wird, mit dem der Kontaktflansch an einer der Werkzeughalterung gegenüber vorgesehenen Roboterschnittstelle verbunden ist, und die Werkzeughalterung relativ zu der Roboterschnittstelle mit wenigstens einem Pneumatikzylinder bewegt wird, wobei die Bewegung des wenigstens einen Pneumatikzylinders durch eine parallel zu dem wenigstens einen Pneumatikzylinder vorgesehene Linearführung linear geführt wird, und eine Neigung und/oder Neigungsänderung der Werkzeughalterung relativ zu der Roboterschnittstelle erfasst wird, gelöst, bei dem die Linearführung gegenüber der Werkzeughalterung und/oder der Roboterschnittstelle nicht mechanisch vorgespannt wird und zwei im Inneren des wenigstens einen Pneumatikzylinders vorgesehene Zylinderkammern separat über jeweils ein Druckregelventil mit Druckluft versorgt werden, wobei die Druckregelventile von einer Datenverarbeitungs- und Steuereinrichtung des Kontaktflanschsystems in Abhängigkeit von der erfassten Neigung und/oder Neigungsänderung der Werkzeughalterung relativ zu der Roboterschnittstelle geregelt werden, wobei der Datenverarbeitungs- und Steuereinrichtung wenigstens eine Werkzeugmasse des Werkzeugs vorgegeben wird und die Druckregelventile derart durch die Datenverarbeitungsund Steuereinrichtung geregelt werden, dass von dem Kontaktflansch eine konstante Kontaktkraft auf das Werkstück bei gleichzeitiger Kompensation einer lageabhängigen Gewichtskraft des Werkzeuges ausgeübt wird.

Bei dem erfindungsgemäßen Verfahren erfolgt vorzugsweise das Ausfahren der Werkzeughalterung aus einer schwebenden Position heraus. Das heißt, zu Beginn eines Bearbeitungsprozesses befindet sich ein Zylinderkolben des wenigstens einen Pneumatikzylinders in einer Anfangsposition, der schwebenden Position, die keine Zylinderendposition ist und in der der Zylinderkolben nicht an einem Anschlag innerhalb des Pneumatikzylinders anliegt, und aus dieser Anfangsposition heraus werden die Druckregelventile in Abhängigkeit von einem/r erfassten Abstand und/oder Abstandsänderung zwischen der Werkzeughalterung und der Roboterschnittstelle, der erfassten Neigung und/oder Neigungsänderung des Kontaktflansches und der ein- oder vorgegebenen Werkzeugmasse geregelt.

Da bei dem erfindungsgemäßen Verfahren eine Kompensation der Gewichtskraft des Werkzeuges vorgenommen wird, erfolgt die Berührung des Werkstückes nahezu kraftlos. Erst nach Erkennung eines Werkzeugkontaktes beginnt der Kraftaufbau.

Die Steilheit des Kraftaufbaus kann beispielsweise über eine Rampenfunktion eingestellt werden.

Das erfindungsgemäße Verfahren ermöglicht eine neigungs- und wegunabhängige Bereitstellung einer Prozesskraft durch den Kontaktflansch. Es treten keinerlei Singularitäten bei Umorientierungen des Kontaktflansches auf. Das heißt, in jeder beliebigen Winkellage des Kontaktflansches ist ein konstanter Betrieb möglich.

In einer bevorzugten Ausgestaltung des erfindungsgemäßen Verfahrens wird bei Druckluft- und/oder Stromaus- und/oder -abfall in dem Kontaktflanschsystem die Bewegung der Linearführung mittels der Datenverarbeitungs- und Steuereinrichtung gestoppt.

Das Stoppen der Bewegung der Linearführung kann beispielsweise dadurch erfolgen, dass wenigstens ein in wenigstens eine an der Linearführung vorgesehene Zahnstange eingreifendes Zahnrad mittels der Datenverarbeitungs- und Steuereinrichtung in seiner Bewegung gestoppt wird.

Vorzugsweise werden bei Druckluft- und/oder Stromaus- und/oder -abfall in dem Kontaktflanschsystem in den Druckluftzuführungen vorgesehene Sperrventile die in dem wenigstens einen Pneumatikzylinder vorhandene Druckluft darin einschließen.

Ein Druckluftausfall kann beispielsweise dadurch einfach ermittelt werden, dass in wenigstens einer die Druckluftzuführungen mit Druckluft versorgenden Druckluftversorgungsleitung der Druck gemessen und an die Datenverarbeitungs- und Steuereinrichtung übermittelt wird.

In einer vorteilhaften Variante des erfindungsgemäßen Verfahrens wird in oder an der Werkzeughalterung eine Kontaktkraft des Kontaktflansches gegenüber dem Werkstück gemessen.

In einer bevorzugten Ausbildung des erfindungsgemäßen Verfahrens wird/werden der Abstand und/oder die Abstandsänderung zwischen der Werkzeughalterung und der Roboterschnittstelle auf Basis einer Magnetfeldpositionsänderung erfasst.

In günstigen Ausgestaltungen des erfindungsgemäßen Verfahrens wird der Kontaktflansch über einen Adapter mit der Datenverarbeitungs- und Steuereinrichtung gekoppelt.

Außerdem kann die Datenverarbeitungs- und Steuereinrichtung so ausgebildet sein, dass mit ihr, also mit ein und derselben Datenverarbeitungs- und Steuereinrichtung, mehrere Kontaktflansche des erfindungsgemäßen Kontaktflanschsystems gleichzeitig individuell betrieben werden können. So können an ein und dieselbe Datenverarbeitungs- und Steuereinrichtung zwei oder mehr als zwei Kontaktflansche des erfindungsgemäßen Kontaktflanschsystems angeschlossen werden und unabhängig voneinander angesteuert werden.

In einer weiteren Ausführungsform des erfindungsgemäßen Verfahrens wird/werden der Abstand und/oder die Abstandsänderung zwischen der Werkzeughalterung und der Roboterschnittstelle über mehrere Lichtemitterdioden aktuell angezeigt. Beispielsweise können 5 bis 15 Lichtemitterdioden, vorzugsweise 11 Lichtemitterdioden zum Einsatz kommen, mit welchen eine momentane Position des Kontaktflansches angezeigt wird.

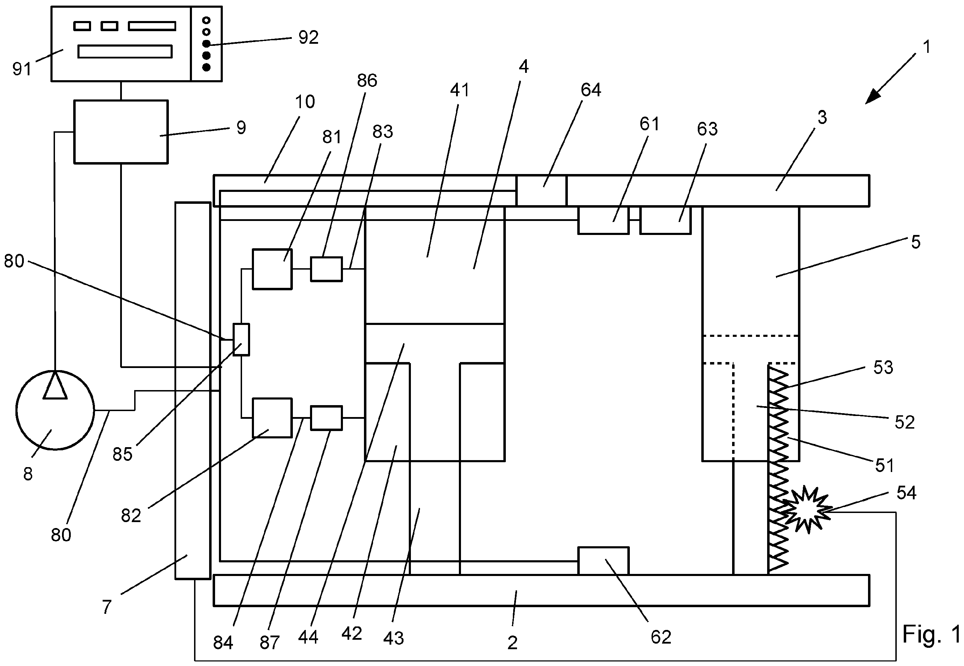

Eine bevorzugte Ausführungsform des erfindungsgemäßen Kontaktflanschsystems und einer daran ausgeführten Ausführungsform des erfindungsgemäßen Verfahrens wird im Folgenden anhand einer Figur näher erläutert, wobei
- Figur 1: schematisch eine mögliche Ausführungsform des erfindungsgemäßen Kontaktflanschsystems zeigt.

Figur 1 zeigt schematisch eine mögliche Ausgestaltung des erfindungsgemäßen Kontaktflanschsystems 1.

Das Kontaktflanschsystem 1 weist einen Kontaktflansch 10 auf. Der Kontaktflansch 10 weist eine Roboterschnittstelle 2 auf, über die er an einen Manipulator, wie beispielsweise einen Industrieroboter, angekoppelt wird. Der Kontaktflansch 10 weist ferner eine gegenüber der Roboterschnittstelle 2 vorgesehene Werkzeughalterung 3 auf, an welche ein Werkzeug, wie beispielsweise ein Schleifwerkzeug, angekoppelt wird. Der Kontaktflansch 10 bildet somit eine Schnittstelle zwischen dem Manipulator und dem Werkzeug, wobei er es ermöglicht, dass die Werkzeughalterung 3 relativ zu der Roboterschnittstelle 2 bewegt werden kann.

Hierzu weist der Kontaktflansch 10 zwischen der Roboterschnittstelle 2 und der Werkzeughalterung 3 ein Stellelement und eine parallel zu dem Stellelement vorgesehene Linearführung auf.

Als Stellelement dient bei dem Kontaktflansch 10 ein Pneumatikzylinder 4. In anderen Ausführungsformen der Erfindung können auch mehrere, wie beispielsweise zwei Pneumatikzylinder 4 vorgesehen sein. Der Pneumatikzylinder 4 weist zwei separate Zylinderkammern 41, 42 auf, zwischen welchen ein Zylinderkolben 44 mit Hilfe einer daran vorgesehenen Kolbenstange 43 beweglich ist. Die Kolbenstange 43 ist in dem gezeigten Ausführungsbeispiel mit der Roboterschnittstelle 2 verbunden.

Jede der Zylinderkammern 41, 42 wird separat mit Druckluft versorgt. Hierfür ist die Zylinderkammer 41 mit einer Druckluftzuführung 83 und die Zylinderkammer 42 mit einer Druckluftzuführung 84 verbunden. Beide Druckluftzuführungen 83, 84 werden durch eine mit einem Kompressor 8 verbundene Druckluftversorgungsleitung 80 mit Druckluft versorgt.

In der Druckluftzuführung 83 ist eine Druckregelventil 81 und in der Druckluftzuführung 84 ist eine Druckregelventil 82 vorgesehen. Beide Druckluftregelventile 81, 82 sind mit einer Datenverarbeitungs- und Steuereinrichtung 9 des Kontaktflanschsystems 1 verbunden. Die Datenverarbeitungs- und Steuereinrichtung 9 regelt jedes der Druckluftregelventile 81, 82 in Abhängigkeit von Daten von unten näher beschriebenen Sensoren des Kontaktflanschsystems 1 und in Abhängigkeit von einer Werkzeugmasse.

Die jeweilige Werkzeugmasse eines an der Werkzeughalterung 3 angebrachten Werkzeugs wird durch einen Nutzer des Kontaktflanschsystems 1 manuell in die Datenverarbeitungs- und Steuereinrichtung 9 eingegeben. Hierfür weist die Datenverarbeitungsund Steuereinrichtung 9 ein Eingabemodul 91 auf, das beispielsweise eine Tastatur oder ein Eingabebildschirm ist.

Die Datenverarbeitungs- und Steuereinrichtung 9 regelt die Druckregelventile 81, 82 derart, dass von dem Kontaktflansch 10 eine konstante Kontaktkraft auf das Werkstück bei gleichzeitiger Kompensation einer lageabhängigen Gewichtskraft des Werkzeuges ausgeübt wird.

In diese Regelung gehen Daten einer Weg- und/oder Positionsmesseinrichtung und einer Neigungs- und/oder Beschleunigungsmesseinrichtung 63 des Kontaktflanschsystems 1 ein.

In der gezeigten Ausführungsform der Erfindung weist die Weg- und/oder Positionsmesseinrichtung einen magnetischen Positionssensor 61 und wenigstens einen Magnet 62 auf. In dem gezeigten Ausführungsbeispiel ist der magnetische Positionssensor an der Werkzeughalterung 3 und der wenigstens eine Magnet 62 an der Roboterschnittstelle 2 vorgesehen. Mit der Weg- und/oder Positionsmesseinrichtung wird/werden der Abstand und/oder die Abstandsänderung zwischen der Werkzeughalterung 3 und der Roboterschnittstelle 2 erfasst und an die Datenverarbeitungs- und Steuereinrichtung 9 übertragen.

In dem gezeigten Ausführungsbeispiel weist die Datenverarbeitungs- und Steuereinrichtung 9 eine Momentanpositionsanzeigeeinheit 92 mit mehreren Lichtemitterdioden auf, durch die momentane Position der Werkzeughalterung relativ zu der Roboterschnittstelle 2 dem Nutzer des Kontaktflanschsystems 1 durch entsprechendes Leuchten der Lichtemitterdioden angezeigt wird.

Mit der Neigungs- und/oder Beschleunigungsmesseinrichtung 63, die in dem gezeigten Beispiel einen Beschleunigungssensor und keinen Neigungssensor aufweist, wird eine Neigung des Kontaktflansches 10 erfasst und an die Datenverarbeitungs- und Steuereinrichtung 9 übertragen.

In den Druckluftzuführungen 83, 84 sind nach den Druckregelventilen 81, 82 in dem gezeigten Ausführungsbeispiel monostabile Sperrventile 86, 87 vorgesehen. Diese Sperrventile 86, 87 sind im stromlosen Zustand geschlossen. Dadurch schließen sie bei Druckluftaus- oder -abfall und/oder Stromausfall die in dem Pneumatikzylinder 4 vorhandene Druckluft ein.

In der Druckluftversorgungsleitung 80 ist ein Drucksensor 85 vorgesehen, mit dem der Druck in der Druckluftversorgungsleitung 80 gemessen wird. Der Drucksensor 85 ist mit der Datenverarbeitungs- und Steuereinrichtung 9 des Kontaktflanschsystems 1 verbunden.

Neben dem Pneumatikzylinder 4 ist zwischen der Roboterschnittstelle 2 und der Werkzeughalterung 3 die Linearführung 5 vorgesehen. Die Linearführung 5 ist in dem gezeigten Ausführungsbeispiel durch eine in eine Führungsbohrung 51 ragende, die gleiche Bewegungsrichtung wie der Zylinderkolben 44 aufweisenden Führungsstange 52 realisiert.

An der Linearführung 5 ist in der gezeigten, speziellen Ausführungsform der Erfindung eine Linearführungsbewegungsstoppereinrichtung vorgesehen. Die Linearführungsbewegungsstoppereinrichtung bewirkt im Fall eines Medienausfalls und/oder -verlusts an dem Kontaktflanschsystem 1 einen Nothalt der Linearführung 5 an der Stelle, an welcher sie sich im Moment des Medienausfalls und/oder -verlusts befindet. Dadurch kommt es nicht zu einem abrupten Herabfallen der Werkzeughalterung 3 mit dem Werkzeug, wodurch eine Beschädigung des Werkstückes und/oder eine Verletzung eines mit dem Kontaktflanschsystem 1 arbeitenden Nutzers vermieden werden kann/können.

In der beispielhaft gezeigten Ausführungsform der Erfindung weist die Linearführungsbewegungsstoppereinrichtung eine Zahnstange 53 und ein in Zähne der Zahnstange 53 eingreifendes, mit der Datenverarbeitungs- und Steuereinrichtung 9 verbundenes Zahnrad 54 auf. Sobald durch die Datenverarbeitungs- und Steuereinrichtung 9 ein Medienausfall und/oder -verlust, wie ein Druckluftausfall oder -abfall und/oder ein Stromausfall oder -abfall registriert wird, wird durch diese die Drehbarkeit des Zahnrades 54 gestoppt, wodurch die Zahnstange 53 und damit auch eine Bewegung der Führungsstange 52 mitgestoppt wird.

An der Werkzeughalterung 3 ist ein Kraftsensor 64 vorgesehen, mit dem eine von dem Kontaktflansch 10 auf eine Werkzeugoberfläche wirkende Kraft gemessen wird.

In dem gezeigten Ausführungsbeispiel weist das Kontaktflanschsystem 1 einen Adapter 7 auf. Der Adapter 7 ist in dem gezeigten Ausführungsbeispiel ein Stecker. Auf einer Seite des Adapters 7 sind die Datenverarbeitungs- und Steuereinrichtung 9 und der Kompressor 8 vorgesehen und an den Adapter 7 angeschlossen. An die andere Seite des Adapters 7 wird der Kontaktflansch 10 mit der daran vorgesehenen Sensorik angeschlossen.

## Patentansprüche

1. Kontaktflanschsystem (1) mit wenigstens einem Kontaktflansch (10) mit einer Roboterschnittstelle (2) und einer gegenüber der Roboterschnittstelle (2) vorgesehenen und relativ zu dieser bewegbaren Werkzeughalterung (3), wenigstens einem zwischen der Roboterschnittstelle (2) und der Werkzeughalterung (3) vorgesehenen Pneumatikzylinder (4) zur Positionierung der Werkzeughalterung (3) relativ zu der Roboterschnittstelle (2), einer parallel zu dem wenigstens einen Pneumatikzylinder (4) vorgesehenen Linearführung (5) und wenigstens einer Neigungs- und/oder Beschleunigungsmesseinrichtung (63) zur Erfassung einer Neigung und/oder Neigungsänderung des Kontaktflansches (10), **dadurch gekennzeichnet, dass** zwischen der Linearführung (5) und der Werkzeughalterung (3) und/oder der Roboterschnittstelle (2) keine mechanische Federeinrichtung vorgesehen ist, und der Kontaktflansch (10) zwei im Inneren des wenigstens einen Pneumatikzylinders (4) durch einen bewegbaren Zylinderkolben (44) getrennte Zylinderkammern (41, 42) mit separaten Druckluftzuführungen (83, 84), wobei in jeder der Druckluftzuführungen (83, 84) jeweils ein Druckregelventil (81, 82) vorgesehen ist, und eine mit der Neigungsund/oder Beschleunigungsmesseinrichtung (63) und den Druckregelventilen (81, 82) gekoppelte Datenverarbeitungs- und Steuereinrichtung (9) aufweist, welche wenigstens eine Prozesswertschnittstelle wenigstens für eine Vorgabe und/oder Eingabe einer Werkzeugmasse aufweist, wobei die Druckregelventile (81, 82) derart durch die Datenverarbeitungs- und Steuereinrichtung (9) geregelt werden, dass von dem Kontaktflansch (10) eine konstante Kontaktkraft auf das Werkstück bei gleichzeitiger Kompensation einer lageabhängigen Gewichtskraft des Werkzeuges ausgeübt wird.

2. Kontaktflanschsystem nach Anspruch 1, **dadurch gekennzeichnet, dass** das Kontaktflanschsystem (1) ferner wenigstens eine Weg- und/oder Positionsmesseinrichtung zur Erfassung eines Abstandes und/oder einer Abstandsänderung zwischen der Werkzeughalterung (3) und der Roboterschnittstelle (2) aufweist und die Datenverarbeitungs- und Steuereinrichtung (9) mit der wenigstens einen Weg- und/oder Positionsmesseinrichtung gekoppelt ist.

3. Kontaktflanschsystem nach Anspruch 1 oder 2, **dadurch gekennzeichnet, dass** an der Linearführung (5) und/oder an dem wenigstens einen Pneumatikzylinder (4) wenigstens eine mit der Datenverarbeitungs- und Steuereinrichtung (9) gekoppelte Linearführungsbewegungsstoppereinrichtung vorgesehen ist.

4. Kontaktflanschsystem nach Anspruch 3, **dadurch gekennzeichnet, dass** die Linearführungsbewegungsstoppereinrichtung wenigstens eine an der Linearführung (5) vorgesehene Zahnstange (53) und wenigstens ein mit der Datenverarbeitungs- und Steuereinrichtung (9) gekoppeltes, in die wenigstens eine Zahnstange (53) eingreifendes Zahnrad (54) aufweist.

5. Kontaktflanschsystem nach einem der vorhergehenden Ansprüche, **dadurch gekennzeichnet, dass** in den Druckluftzuführungen (83, 84) monostabile Sperrventile (86, 87) vorgesehen sind.

6. Kontaktflanschsystem nach einem der vorhergehenden Ansprüche, **dadurch gekennzeichnet, dass** in wenigstens einer die Druckluftzuführungen (83, 84) mit Druckluft versorgenden Druckluftversorgungsleitung (80) wenigstens ein mit der Datenverarbeitungs- und Steuereinrichtung (9) gekoppelter Drucksensor (85) vorgesehen ist.

7. Kontaktflanschsystem nach einem der vorhergehenden Ansprüche, **dadurch gekennzeichnet, dass** in oder an der Werkzeughalterung (3) wenigstens ein Kraftsensor (64) vorgesehen ist.

8. Kontaktflanschsystem nach Anspruch 2, **dadurch gekennzeichnet, dass** die Wegund/oder Positionsmesseinrichtung wenigstens einen magnetischen Positionssensor (61) und wenigstens einen Magnet (62) aufweist.

9. Kontaktflanschsystem nach einem der vorhergehenden Ansprüche, **dadurch gekennzeichnet, dass** zwischen dem Kontaktflansch (10) und der Datenverarbeitungsund Steuereinrichtung (9) ein Adapter (7) vorgesehen ist.

10. Kontaktflanschsystem nach einem der vorhergehenden Ansprüche, **dadurch gekennzeichnet, dass** die Datenverarbeitungs- und Steuereinrichtung (9) und/oder die Weg- und/oder Positionsmesseinrichtung mit einer mehrere Lichtemitterdioden aufweisenden Momentanpositionsanzeigeeinheit (92) gekoppelt ist/sind.

11. Verfahren zum Bearbeiten einer Oberfläche eines Werkstückes mit einem an einer Werkzeughalterung (3) eines Kontaktflansches (10) eines Kontaktflanschsystems (1) gehaltenen Werkzeug, wobei der Kontaktflansch (19) mit einem Roboter bewegt wird, mit dem der Kontaktflansch (10) an einer der Werkzeughalterung (3) gegenüber vorgesehenen Roboterschnittstelle (2) verbunden ist, und die Werkzeughalterung (3) relativ zu der Roboterschnittstelle (2) mit wenigstens einem Pneumatikzylinder (4) bewegt wird, wobei die Bewegung des wenigstens einen Pneumatikzylinders (4) durch eine parallel zu dem wenigstens einen Pneumatikzylinder (4) vorgesehene Linearführung (5) linear geführt wird, und eine Neigung und/oder Neigungsänderung des Kontaktflansches (10) erfasst wird, **dadurch gekennzeichnet, dass** die Linearführung (5) gegenüber der Werkzeughalterung (3) und/oder der Roboterschnittstelle (2) nicht mechanisch vorgespannt wird und zwei im Inneren des wenigstens einen Pneumatikzylinders (4) vorgesehene Zylinderkammern (41, 42) separat über jeweils ein Druckregelventil (81, 82) mit Druckluft versorgt werden, wobei die Druckregelventile (81, 82) von einer Datenverarbeitungs- und Steuereinrichtung (9) des Kontaktflanschsystems (1) in Abhängigkeit von der erfassten Neigung und/oder Neigungsänderung des Kontaktflansches (10) geregelt werden, wobei der Datenvearbeitungs- und Steuereinrichtung (9) wenigstens eine Werkzeugmasse des Werkzeugs vorgegeben wird und die Druckregelventile (81, 82) derart durch die Datenverarbeitungs- und Steuereinrichtung (9) geregelt werden, dass von dem Kontaktflansch (10) eine konstante Kontaktkraft auf das Werkstück bei gleichzeitiger Kompensation einer lageabhängigen Gewichtskraft des Werkzeuges ausgeübt wird.

12. Verfahren nach Anspruch 11, **dadurch gekennzeichnet, dass** der Datenverarbeitungs- und Steuereinrichtung (9) zusätzlich eine Prozesskraft und/oder eine Rampenzeit zum Aufbau oder zur Änderung einer Prozesskraft vorgegeben wird.

13. Verfahren nach Anspruch 11 oder 12, **dadurch gekennzeichnet, dass** sich ein Zylinderkolben (44) des wenigstens einen Pneumatikzylinders (4) zu Beginn eines Bearbeitungsprozesses in einer Anfangsposition befindet, die keine Zylinderendposition ist und in der der Zylinderkolben nicht an einem Anschlag innerhalb des Pneumatikzylinders anliegt, ein Abstand und/oder eine Abstandsänderung zwischen der Werkzeughalterung (3) und der Roboterschnittstelle (2) erfasst wird und aus der Anfangsposition heraus die Druckregelventile (81, 82) in Abhängigkeit von dem/r erfassten Abstand und/oder Abstandsänderung zwischen der Werkzeughalterung (3) und der Roboterschnittstelle (2), der erfassten Neigung und/oder Neigungsänderung des Kontaktflansches (10) und der ein- oder vorgegebenen Werkzeugmasse geregelt werden.

14. Verfahren nach einem der Ansprüche 11 bis 13, **dadurch gekennzeichnet, dass** bei Druckluft- und/oder Stromaus- und/oder -abfall in dem Kontaktflanschsystem (1) die Bewegung der Linearführung (5) und/oder des wenigstens einen Pneumatikzylinders (4) mittels der Datenverarbeitungs- und Steuereinrichtung (9) gestoppt wird.

15. Verfahren nach Anspruch 14, **dadurch gekennzeichnet, dass** zum Stoppen der Bewegung der Linearführung (5) wenigstens ein in wenigstens eine an der Linearführung (5) vorgesehene Zahnstange (53) eingreifendes Zahnrad (54) mittels der Datenverarbeitungs- und Steuereinrichtung (9) in seiner Bewegung gestoppt wird.

16. Verfahren nach einem der Ansprüche 11 bis 15, **dadurch gekennzeichnet, dass** bei Druckluft- und/oder Stromaus- und/oder -abfall in dem Kontaktflanschsystem (1) in den Druckluftzuführungen (83, 84) vorgesehene Sperrventile (86, 87) die in dem wenigstens einen Pneumatikzylinder (4) vorhandene Druckluft darin einschließen.

17. Verfahren nach einem der Ansprüche 11 bis 16, **dadurch gekennzeichnet, dass** in wenigstens einer die Druckluftzuführungen (83, 84) mit Druckluft versorgenden Druckluftversorgungsleitung (80) ein Druck gemessen und an die Datenverarbeitungs- und Steuereinrichtung (9) übermittelt wird.

18. Verfahren nach einem der Ansprüche 11 bis 17, **dadurch gekennzeichnet, dass** in oder an der Werkzeughalterung (3) eine Kontaktkraft des Kontaktflansches (10) gegenüber dem Werkstück gemessen wird.

19. Verfahren nach einem der Ansprüche 11 bis 18, **dadurch gekennzeichnet, dass** der Abstand und/oder die Abstandsänderung zwischen der Werkzeughalterung (3) und der Roboterschnittstelle (2) auf Basis einer Magnetfeldpositionsänderung erfasst wird/werden.

20. Verfahren nach einem der Ansprüche 11 bis 19, **dadurch gekennzeichnet, dass** der Kontaktflansch (10) über einen Adapter (7) mit der Datenverarbeitungs- und Steuereinrichtung (9) gekoppelt wird.

21. Verfahren nach einem der Ansprüche 11 bis 20, **dadurch gekennzeichnet, dass** der Abstand und/oder die Abstandsänderung zwischen der Werkzeughalterung (3) und der Roboterschnittstelle (2) über mehrere Lichtemitterdioden aktuell angezeigt wird/werden.
